# FASCICULE DE BREVET EUROPEEN

(11) **EP 2 649 341 B1**
(45) Date de publication et mention de la délivrance du brevet: **06.04.2016**
(21) Numéro de dépôt: 11761562.5
(22) Date de dépôt: 21.09.2011
(51) Int. Cl.: F16D 55/226, F16D 65/14

(54) **FREIN À DISQUE À VERROU DE BLOCAGE DE LA CARTOUCHE DE CONVERSION PAR UN VERROU**
SCHEIBENBREMSE MIT VERRIEGELUNGSELEMENT ZUR VERRIEGELUNG DES UMSETZUNGSEINSATZES MIT EINER VERRIEGELUNG
DISC BRAKE HAVING A LATCH FOR LOCKING THE CONVERSION CARTRIDGE BY MEANS OF A LATCH

(30) Priorité: 22.10.2010 FR 1004171
(43) Date de publication de la demande: 16.10.2013
(73) Titulaire: Chassis Brakes International B.V., 1011 VM Amsterdam (NL)
(72) Inventeur: VINCK, Jan, F-49250 Beaufort En Vallee (FR); CHAIGNEAU, Fabien, F-49250 Rochefort sur Loire (FR)
(74) Mandataire: Hurwic, Aleksander Wiktor
(86) Numéro de dépôt international: PCT/EP2011/066390
(87) Numéro de publication internationale: WO 2012/052245

(56) Documents cités:
- EP-A1- 1 757 836
- EP-A1- 1 936 227
- WO-A1-2009/016680

## Description

### Domaine de l'invention

La présente invention concerne un frein à disque comprenant un étrier flottant chevauchant le disque de frein, portant un patin fixe et formant un cylindre logeant un piston portant un patin mobile pour serrer le disque de frein,
- le piston étant commandé par le circuit hydraulique et par le système de freins de stationnement par l'intermédiaire d'une cartouche de conversion de mouvement transformant le mouvement de pivotement du levier pivotant relié au frein de stationnement et porté par l'étrier, en un mouvement de translation pour pousser le piston de frein,
- le cylindre ayant une partie avant logeant le piston de frein et une partie arrière formant un logement recevant la cartouche de conversion à forme de révolution venant contre le patin mobile et le fond du cylindre, la cartouche traversant de manière étanche un orifice axial du fond du cylindre pour relier son arbre de commande au levier pivotant du frein de stationnement.

### Etat de la technique

On connaît déjà un tel frein à disque décrit dans le document EP 1 936 227. Ce document concerne notamment un procédé d'assemblage d'un frein à disque et en particulier l'assemblage de la cartouche convertissant le mouvement de rotation du levier du frein de stationnement en un mouvement de translation du piston de frein pour mettre en oeuvre le frein de stationnement ou le libérer.

Dans ce montage, la partie arrière de la cartouche comporte un pion venant dans un trou du fond du logement recevant la cartouche dans le cylindre de l'étrier de frein. Cette réalisation est relativement compliquée tant à fabriquer qu'à installer et le pion subit des efforts de rotation importants lors de l'actionnement du frein à main.

De façon plus détaillée selon le document EP 1 936 227 la figure 1 montre le cylindre 300 d'un frein à disque, connu, logeant le piston non représenté commandant le patin mobile du frein. Le piston est actionné par le liquide de frein sous pression envoyé dans la chambre 301 délimitée dans le cylindre 300. La chambre 301 est par ailleurs occupée par une cartouche 310 de conversion pour convertir le mouvement du frein à main en une action de blocage du disque de frein. La cartouche 310 est logée dans le prolongement 302 du cylindre 300 et elle traverse de manière étanche un orifice 304 dans le fond 303 du prolongement 302 pour recevoir extérieurement le levier pivotant relié à la commande du frein à main. Le mouvement de pivotement du levier est transformé par la cartouche en un mouvement de translation faisant avancer le piston par une action mécanique par l'intermédiaire du piston de conversion assurant lui-même la compensation d'usure des plaquettes de frein.

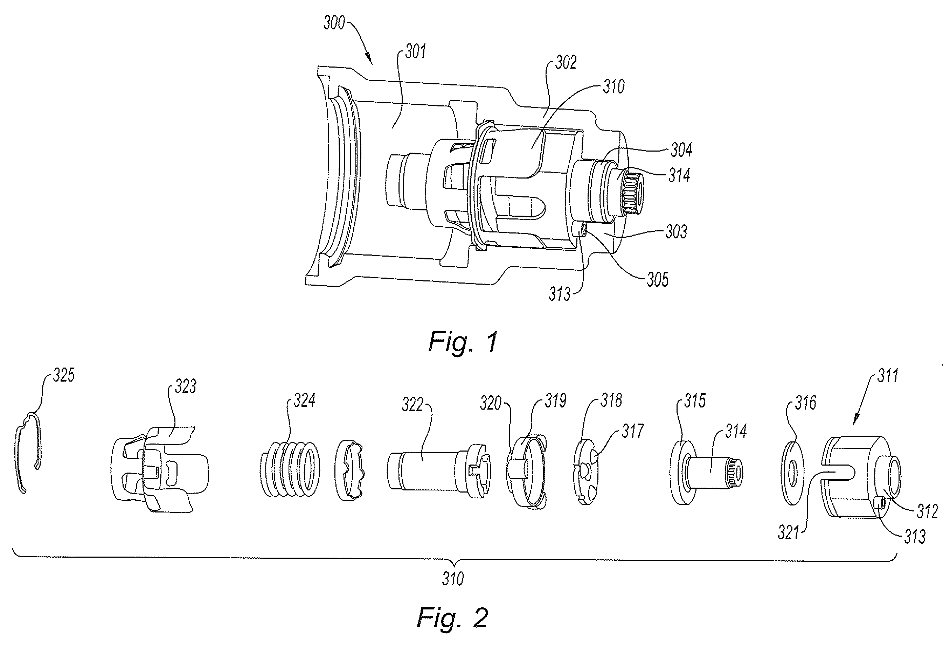

La vue éclatée de la figure 2 montre la structure de la cartouche 310 connue, composée d'un palier 311 en forme de pot terminé par un manchon 312 et muni d'un pion 313 de blocage en rotation.

Le palier 311 reçoit un axe de transmission 314 muni d'un plateau 315 avec interposition d'une rondelle 316 pour permettre la rotation du plateau 315 contre le fond du palier 311 ; l'axe de transmission 314 porté par le manchon 312 sort du fond 313 du prolongement 302 pour recevoir le levier pivotant du frein à main.

La face avant du plateau 315 est munie de gorges de profondeur variable pour coopérer avec les billes 317 portées par une cage 318. Les billes 317 coopèrent par ailleurs avec un autre plateau 319 muni de gorges homologues à celles du plateau 315. Le plateau 319 comporte des parties en saillie latéralement 320 destinées à se loger dans des découpes 321 du palier 311 pour bloquer la rotation du plateau 319 tout en le guidant, libre en translation, suivant l'axe de la cartouche 310.

Le plateau 319 pousse le piston de conversion 322 qui agit sur le piston du frein.

La cage 323 maintient l'assemblage des pièces 311-322 avec interposition d'un ressort de compression 324. La cage 323 s'accroche sur le palier 311 et reçoit un clip 325 pour fixer la cartouche 310 dans le logement formé d'un prolongement 302 ; le pion 313 est alors engagé dans un trou borgne 305 du fond 303 du prolongement 302 pour bloquer la rotation de la partie arrière de la cartouche de conversion 310 comme cela a été expliqué ci-dessus.

### But de l'invention

La présente invention a pour but de simplifier la fabrication de l'étrier de frein en réduisant le nombre de pièces constituant la cartouche de conversion de mouvement, la fabrication de l'étrier et le montage.

### Exposé et avantages de l'invention

A cet effet l'invention concerne un frein à disque du type défini ci-dessus, caractérisé en ce que, la cartouche de conversion comprend:
- une partie arrière appuyée contre le fond du logement du cylindre et se composant :
   * d'un verrou de blocage en rotation en forme de couronne appuyée autour de l'orifice axial du fond du logement, et portant au moins une branche de forme cylindrique, dirigée vers l'avant parallèle à l'axe et
      d'un arbre de commande relié au levier pivotant composé d'un manchon traversant la couronne, et d'un plateau venant devant la couronne dans le périmètre défini par la branche du verrou,
      la face avant du plateau comportant des rampes,
- une partie avant appuyée contre le piston de frein, mobile en translation par rapport au cylindre mais bloquée en rotation, et se composant :
   * d'un piston de conversion muni d'un (deuxième) plateau destiné à coopérer avec le (premier) plateau de l'arbre de commande avec interposition de billes mobiles dans des rampes des deux plateaux pour transformer le mouvement de rotation relatif des deux plateaux en un mouvement de translation du piston de conversion pour agir sur le piston de frein et
      le bord du deuxième plateau comporte au moins une rainure axiale de verrouillage en rotation pour recevoir la branche correspondante du verrou,
   * d'une cage de retenue du piston de conversion dans le cylindre par l'intermédiaire d'un clip ainsi qu'un ressort de rappel interposé entre la cage et le piston de conversion, agissant contre le mouvement de translation généré par les plateaux et les billes,
le cylindre comporte au niveau de sa partie arrière formant le logement recevant la cartouche de conversion, au moins une rainure longitudinale recevant la branche de verrouillage du verrou, branche par ailleurs engagée dans une rainure axiale du deuxième plateau.

Ainsi, le blocage en rotation (ou effet antirotation) du piston du convertisseur, c'est-à-dire de l'écrou mobile du convertisseur est réalisé directement par l'étrier et la cartouche de conversion munie du verrou engagé sur l'arrière de la cartouche de conversion pour bloquer en rotation le piston de conversion, le verrou étant lui-même bloqué en rotation par son engagement dans les rainures du logement de l'étrier.

On supprime ainsi de manière très avantageuse le boîtier arrière de la cartouche et son pion antirotation destiné à se placer dans un trou au fond de l'étrier. Ce boîtier ou cage de la partie arrière est remplacé par le simple palier arrière formé par le verrou. La suppression de la cage de la partie arrière améliore la purgeabilité du circuit de frein puisqu'il n'y a aucune pièce fermée dans le convertisseur de mouvement selon l'invention. Cela simplifie aussi la réalisation de la cage, et raccourcit la longueur du cylindre ou fût de l'étrier recevant la cartouche.

L'invention simplifie l'assemblage de la cartouche qui se fait directement en bord de chaîne d'assemblage du frein ; on supprime ainsi une machine dédiée à la préparation de la cartouche assemblée. Il n'y a plus de clipage de la cage sur le boîtier arrière ce qui supprime le risque de formation de copeaux.

Enfin, cette forme de réalisation peut s'appliquer à des pistons de plus petit diamètre que celui des pistons utilisés actuellement et avec des efforts de piston identiques.

Suivant une autre caractéristique avantageuse,
- le logement de la cartouche dans l'étrier et le plateau du piston de conversion comportent chacun trois rainures longitudinales et
- le verrou est muni de trois branches longitudinales,
- les rainures étant réparties de manière équiangulaire et se faisant face et les branches étant dans des positions homologues à celles des rainures et se logent chacune à la fois dans une rainure du logement et une rainure du plateau du piston.

Ces trois rainures longitudinales à la fois dans le logement de l'étrier et dans le plateau du piston de conversion et les trois branches longitudinales du verrou bloquant le piston de conversion, permettent un excellent blocage en rotation du piston tout en évitant les problèmes liés au couple important qui peut être appliqué au piston de conversion par la liaison constituée par la transmission à billes entre les plateaux. Cet excellent blocage en rotation est également favorable au rappel du piston de conversion lorsque le frein de stationnement est libéré.

Suivant une autre caractéristique avantageuse, le verrou se compose d'une couronne portant trois branches longitudinales, parallèles à l'axe, et un manchon dépassant de la couronne du côté opposé à celui portant les branches , le manchon étant destiné à traverser partiellement le fond du logement du cylindre, la couronne étant appuyée autour de l'orifice axial du fond du logement et constituant un palier pour le plateau de l'arbre de commande.

Cette forme de réalisation du verrou assure à la fois l'équilibrage des efforts transmis par le convertisseur de mouvements au verrou et par le verrou au logement de l'étrier tout en servant de palier de rotation pour la partie arrière du convertisseur c'est-à-dire le plateau de l'arbre de commande. Cette pièce est particulièrement simple à réaliser et comme elle ne subit que des efforts de cisaillement très faibles dans sa position bloquée entre le piston de conversion et le logement de l'étrier, cette pièce se réalise facilement en matière plastique.

Les efforts reçus par les branches du verrou et qui sont ensuite transmis au logement de l'étrier sont répartis sur des surfaces importantes de sortes que les efforts locaux sont faibles. Ce qui est particulièrement important pour la longévité de cette pièce et de l'ensemble du frein à disque ainsi équipé.

Suivant une autre caractéristique avantageuse, la rainure du logement a une section en arc de cercle et la branche du verrou a une section rectangulaire avec un côté en forme d'arc de cercle de rayon sensiblement égal à celui de la rainure dans laquelle la branche pénètre au moins sur une partie de sa section à une section en forme d'arc de cercle égale à celle de la rainure. Cette forme de rainures et de branches est très facile à réaliser en particulier l'usinage de chaque rainure.

Les formes courbes venant les uns dans les autres sont des formes en arcs de cercle homothétiques par rapport à un même centre de courbure, de façon à tenir compte de l'écart même léger qui peut exister entre la surface intérieure de la rainure du logement et la surface extérieure de la branche.

Suivant une autre caractéristique avantageuse dans ce contexte le plateau du piston a au moins une rainure de section rectangulaire.

Ainsi, globalement chaque branche du verrou a une section rectangulaire avec deux côtés droits et deux côté opposés, curvilignes, l'un convexe pour la partie venant dans la rainure du logement de l'étrier et l'autre concave épousant la forme convexe du fond de la rainure homologue du plateau du piston de commande.

En fait la rainure de l'étrier est celle homologue du plateau du piston de commande se complète pour constituer le logement d'une branche du verrou. Dans la mesure où le plateau du piston se déplace en translation le long des branches du verrou il est avantageux que les côtés latéraux de chaque rainure du plateau du piston de conversion soient des surfaces planes qui sont soit parallèles au plan médian axial de la branche soit dirigées radialement pour passer par l'axe du logement de l'étrier.

Le fond de la rainure du plateau du piston peut être plan et le côté correspondant de la branche du verrou sera plan. Cela facilite l'usinage soit du moule soit de la rainure si cet usinage est fait directement sur le plateau du piston de conversion.

La longueur de la nervure longitudinale constituée ainsi par une branche et surtout la longueur des nervures longitudinales, de préférence au nombre de trois, du piston de conversion, permettent un excellent guidage et une excellente tenue du piston dans l'étrier. Les branches dépassant vers l'avant permettent de réduire la longueur axiale de la cartouche de conversion sans que cela ne soit au détriment du guidage.

Suivant une autre caractéristique avantageuse, le logement de la cartouche comporte un épaulement recevant en appui la collerette de la cage et une gorge périphérique pour recevoir le clip.

Suivant une autre caractéristique avantageuse, la cage est une pièce en acier élastique de forme globale tronconique ayant un fond en forme de couronne portant des lames reliées à une collerette et des lames intermédiaires, d'extrémité libre, recevant le clip.

Cette cage et sa coopération d'une part avec l'épaulement et d'autre part avec la gorge périphérique recevant le clip, permettent un excellent accrochage solidaire de la cartouche de conversion dans son logement du fût de l'étrier. Cet accrochage ne peut s'ouvrir de lui-même. Il nécessite un outil particulier tel qu'un manchon, prenant appui sur la forme tronconique de la cage pour resserrer progressivement les lamelles de la cage et permettre ainsi, par le mouvement rentrant, d'escamoter la collerette et de la dégager de sa gorge. La mise en place se fait dans les mêmes conditions, en procédant dans l'ordre inverse.

Globalement, le frein à disque équipé d'une telle cartouche de conversion de mouvement est simple à réaliser et à assembler grâce au nombre réduit de pièces. Il permet un excellent fonctionnement du frein et en garantit la fiabilité.

### Dessins

La présente invention sera décrite ci-après de manière plus détaillée à l'aide des dessins annexés dans lesquels:
- la figure 1 est une vue en coupe d'un cylindre de frein à disque équipé d'une cartouche de conversion selon l'état de la technique,
- la figure 2 est une vue éclatée de la cartouche de conversion, de la figure 1,
- la figure 3 est une vue en coupe schématique d'un étrier de frein selon l'invention installé sur le disque de frein, montrant le piston de frein sans la cartouche de conversion,
- les figures 4A, 4B montrent deux vues en perspective suivant des directions opposées de la cartouche de conversion selon l'invention,
- la figure 5 est une vue en coupe axiale du cylindre de l'étrier de frein selon l'invention montrant en négatif la forme du volume intérieur du cylindre de l'étrier de frein.
- les figures 6A, 6B sont des vues en perspective selon deux directions différentes du verrou de blocage en rotation de la cartouche de conversion,
- la figure 7 est une vue en plan schématique du verrou et de son installation dans l'étrier.
- la figure 7A est une vue de détail d'une branche du verrou de la figure.
- la figure 7B montre le détail du verrou au niveau d'une rainure axiale.
- la figure 8 est une vue en perspective du piston de conversion.

### Description d'un mode de réalisation de l'invention

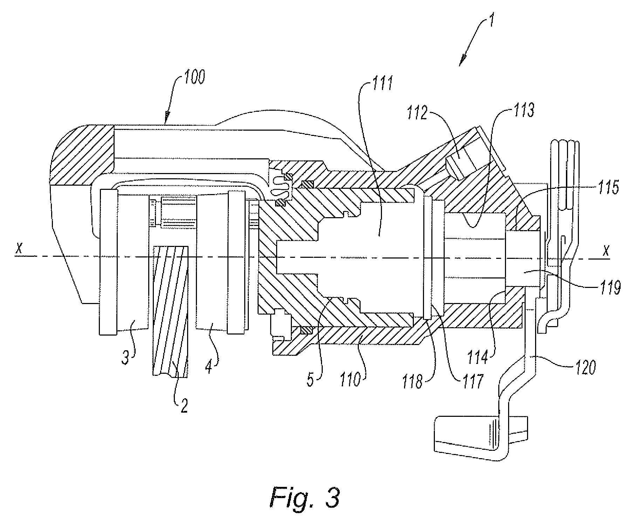

Par convention, pour simplifier la description du frein à disque selon l'invention, on utilisera l'orientation donnée par l'axe xx de la figure 3 dont le côté gauche est dirigé vers ce qui est considéré comme l'avant et le côté droit, dirigé vers ce qui est considéré comme l'arrière: ainsi l'avant du piston de frein est tourné vers son patin de frein 4 et l'arrière du piston de frein 5, tourné vers son logement 113 dans l'étrier 100. De même, le convertisseur de mouvement aura une partie avant du côté du piston de frein et une partie arrière du côté du fond de son logement dans l'étrier.

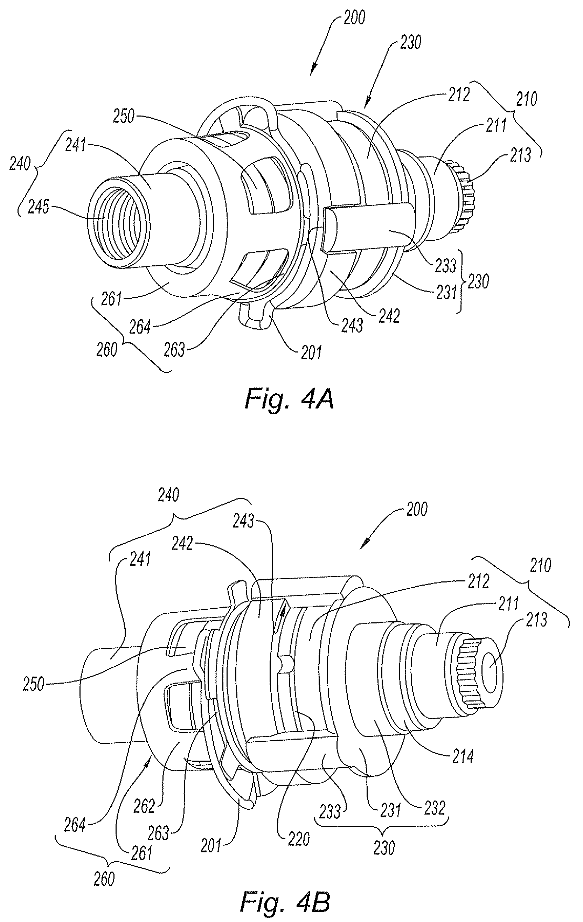

Selon la figure 3, l'invention concerne un frein à disque 1 associé au circuit de freinage et à la commande du frein de stationnement. L'étrier flottant 100 chevauche le disque de frein 2 et porte un patin fixe 3 et un patin mobile 4. Ce dernier est actionné par un piston de frein 5 logé dans le cylindre 110 (ou fût) de l'étrier 100. Le cylindre 110 délimite une chambre étanche 111 reliée au circuit de frein par un branchement 112 non détaillé. Cette chambre étanche 111 loge également une cartouche de conversion de mouvement 200 (figures 4A, 4B) appliquée contre le fond 114 du logement 113 du cylindre de l'étrier. Le logement 113 prolonge le cylindre 110. Le fond 114 est muni d'un orifice 115 que traverse de manière étanche l'extrémité de la cartouche 200 pour la liaison d'entraînement avec le levier pivotant 120 relié à la commande du frein à main, dont le mouvement de rotation (pivotement) sera transformé en un mouvement de translation appliqué au piston de frein 5.

La cartouche de conversion de mouvement 200 représentée aux figures 4A, 4B se compose d'un arbre de commande 210 relié au levier pivotant recevant le mouvement du frein à main, d'une cage 220 tenant des billes, d'un verrou de blocage en rotation 230 et d'un piston de conversion 240 avec un ressort de compression 250 et une cage 260 coiffant l'ensemble et permettant de fixer la cartouche de conversion 200 dans le logement 113 en la bloquant en translation par un clip 201.

La cartouche 200 est bloquée en rotation dans le logement 113 par le verrou 230 dont les branches 233 sont bloquées en rotation dans des rainures homologues 119 réalisées dans le logement 113. La partie de la cartouche à l'exception du piston de conversion 240 est bloquée en translation par la cage 260 appuyée contre l'épaulement 117 et le clip 201 déployé à l'arrière. La cartouche 200 porte le verrou de blocage en rotation 230 constitué par une couronne 231 prolongée vers l'arrière par un manchon 232 et vers l'avant par des branches de verrouillage 233. Ce verrou 230 coiffe ou reçoit libre en rotation l'arbre de commande 210 formé d'un manchon cylindrique 211 logé en rotation dans le manchon 232 du verrou et muni d'un plateau (premier plateau) 212 contre lequel s'appuie extérieurement la couronne 231 du verrou 230. Derrière le manchon 232, un anneau 214 porte un joint torique pour assurer l'étanchéité du manchon 232 logé dans l'orifice 115 de l'étrier. Le manchon 211 de l'arbre de commande 210 traverse une partie étagée du l'orifice 115 (partie non détaillée) ou vient en saillie à l'extérieur. L'extrémité de l'arbre est munie d'une prise 213 pour fixer le levier pivotant relié au frein à main.

A l'avant, une cage 220 munie de billes, est interposée entre le plateau 212 et le plateau 242 formant ainsi le moyen de conversion du mouvement de pivotement de l'arbre 210 en un mouvement de translation du piston de conversion 240. En effet, la face avant du premier plateau 212 et la face arrière du second plateau 242 comportent des rainures de profondeur variable. Ces rainures sont homologues associées deux à deux reçoivent les billes portées par de la cage 220 de sorte que le mouvement de pivotement du plateau 212 (libre en pivotement) par rapport au plateau 242 (bloqué en pivotement), produit un mouvement de translation du plateau 242 et par suite du piston de conversion 240.

Le plateau 242 comporte des rainures axiales 243 pour recevoir les branches 233 du verrou 230 et être ainsi solidaire en rotation des branches 233 tout en pouvant coulisser par rapport à celles-ci dans la direction de l'axe. Comme les branches 233 sont elles-mêmes verrouillées dans les rainures 119 du logement 113 de l'étrier 100, le second plateau 242 est ainsi bloqué en rotation.

Le piston de conversion 240 se prolonge vers l'avant par un manchon 241 muni intérieurement d'un filetage 245 formant un écrou et servant à la compensation de l'usure des plaquettes de frein par un mécanisme de rotation en principe non réversible, connu en soi et non décrit ici.

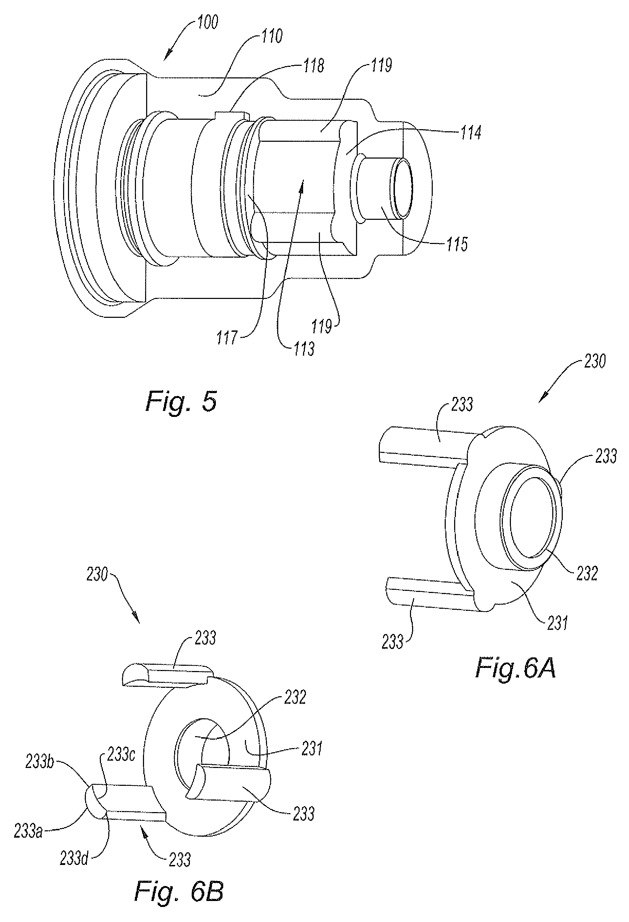

La figure 5 montre en négatif la forme du volume intérieur de l'étrier 100 au niveau du cylindre 110 et du logement 113 avec les rainures axiales 119 et l'orifice 115 dans le fond 114 du logement 113. L'épaulement 117 sert d'appui à la couronne du verrou derrière la gorge périphérique 118 recevant le clip 201.

Les figures 6A, 6B montrent le verrou 230 suivant deux vues isométriques correspondant à des directions différentes. Le verrou 230 est composé de la couronne 231 portant les branches 233 de forme cylindrique parallèle à l'axe XX, et se prolongeant vers l'arrière par le manchon 232. La forme de la section des branches de verrouillage 233, et assimilable à un rectangle curviligne dont le grand côté intérieur 233a tourné vers l'axe XX a un rayon de courbure centré sur l'axe XX et dont le grand côté extérieur 233c venant dans la rainure respective 119 a une courbure très accentuée. Les côtés curvilignes 233a, 233c rejoignent des côtés droits 233b, 233d dirigés radialement ou parallèles à la direction radiale passant par le milieu de la section de chaque branche. Les branches 233 au nombre de trois sont réparties de manière équiangulaire.

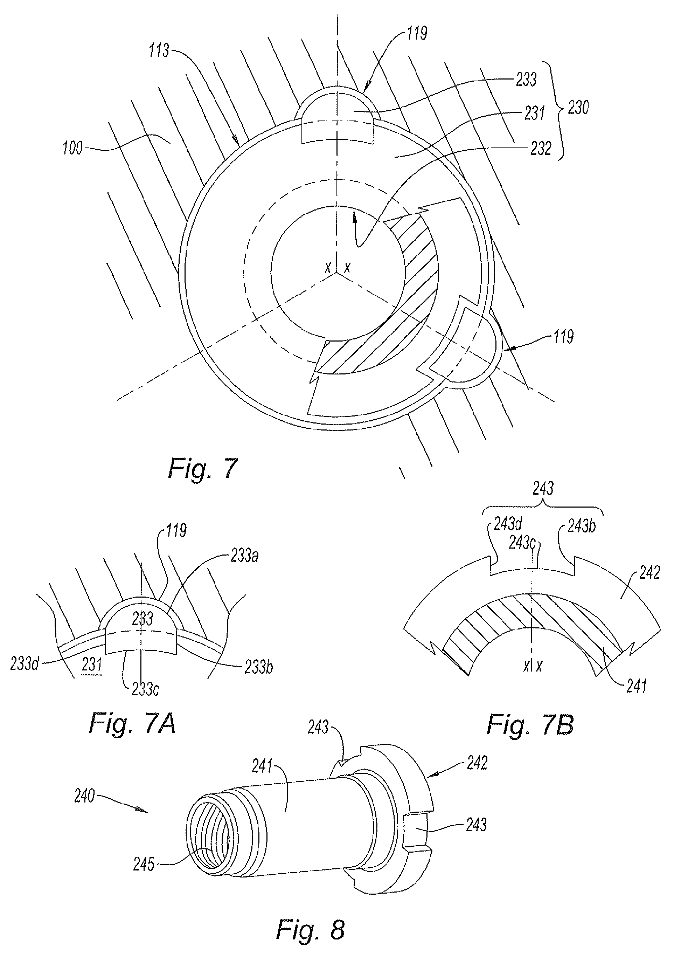

La figure 7 est une vue axiale du convertisseur avec son verrou 230 et le piston de conversion 240 installés dans le logement 113 de l'étrier 100, mettant en évidence la forme de la rainure 119 du logement 113, celle de la branche 233 du verrou 230 et celle de la rainure 243 du plateau 242 du piston 240.

Comme déjà indiqué, le verrouillage du convertisseur dans l'étrier se fait à l'aide d'un verrou 230, ici à trois branches dont deux seules sont représentées dans un but de simplification du dessin.

Les branches 233 ont une forme cylindrique dirigée axialement, parallèlement à l'axe XX et de section rectangulaire curviligne, adaptée à la fois à la forme de la rainure 119 de l'étrier et celle du plateau 242 du piston 240.

La rainure 119 a une section en arc de cercle de petit rayon par rapport au rayon du logement 113. La partie de la branche 233 venant dans la rainure 119 a une section en arc de cercle formant un côté arrondi 233a de la section de la branche avec un rayon identique ou plus exactement homothétique centré sur le même centre de courbure que le rayon de la rainure 119.

Les côtés 233b et 233d de la branche 233 sont droits (plans) parallèles au plan médian de la branche 233 passant par l'axe XX. Les côtés 233b, 233d peuvent aussi être des plans dirigé radialement c'est-à-dire passant par l'axe XX. Cette variante n'est pas représentée.

La section de la branche 233 dépasse du contour de la couronne 231 non seulement par le côté 233a mais aussi par des parties des côtés 233b, 233d. Le quatrième côté 233c est un côté courbe comme représenté. Il peut également être droit, c'est-à-dire plan.

La branche 233 logée de manière fixe dans la rainure 119 guide en translation la couronne 242 dans laquelle pénètre la branche par son côté 233c et une partie de ses côtés 233b, 233d.

La rainure 243 a une section correspondant à celle de la section de la branche 233. La forme de la section de la rainure 243 est une forme en U à côtés 243b, 243d homologues des côtés 233b, 233d de la branche 233 et le fond 243c est de forme homologue à celle du côté 233c de la branche 233 ; dans cet exemple le côté 233c est courbe, par exemple en arc de cercle centré sur l'axe XX selon une variante non représentée, le fond 243c est droit et le côté 233c de la branche est également droit ce qui simplifie l'usinage de la rainure 243 si celle-ci n'est pas moulée par injection. Le détail des formes de la branche 233 et de la rainure 243 apparaît aux figures 7A, 7B.

La figure 8 montre une vue isométrique du piston de conversion 240 composé de son plateau 242 dont la face arrière munie des gorges de profondeur variable n'apparaît pas (il s'agit d'un moyen connu en soi), et qui comporte des rainures 243 dans toute l'épaisseur du plateau 242 pour recevoir les branches 233 comme cela a été décrit ci-dessus. Le plateau 242 se poursuit vers l'avant par le manchon cylindrique 241 recevant extérieurement le ressort de compression 250 (figure 4A, 4B), dont l'extrémité avant est munie intérieurement d'un filetage 245 pour le mécanisme de compensation automatique d'usure.

La face arrière du plateau 242 du piston de conversion 240 est munie de rainures de profondeur variable, complémentaires dans leur disposition et leur forme à celles des rainures de profondeur variable (non visibles) du premier plateau 212 de l'arbre de commande 210. Les billes, par exemple au nombre de trois de la cage 220 sont destinées à rouler dans les rainures homologues du plateau 212 de l'arbre de commande 210 et de celles du plateau 242 du piston 240 pour transformer le mouvement de rotation du plateau 212 de l'arbre de commande 210 en un mouvement de translation du piston de conversion 240 par le jeu des rampes complémentaires formées par les rainures comme cela est connu en soi. Un ressort de compression 250 est emmanché sur le manchon cylindrique 241 du piston de conversion et s'appuie d'une part contre le plateau 242 et d'autre part contre le fond 261 d'une cage 260 également installée sur le manchon 241 du piston 240.

La cage 260 est une pièce en acier élastique de forme globale tronconique comprenant une couronne constituant le fond 261 côté avant, portant des lames 262 reliées deux à deux aux deux parties d'une collerette fendue 263 tournée vers l'extérieur et des lames intermédiaires 264, libres. Le clip 201 est installé dans la cage 260 autour et entre les lames 262, 264, pour retenir le convertisseur 200 dans son logement 113 de l'étrier 100. Pour la mise en place d'une manière connue en soi, la collerette fendue 263 et le clip 201 sont comprimés à l'aide d'un outil en forme de manchon. Le clip 201 retient la cage 260 en coopérant avec une gorge périphérique 118 et la collerette fendue 263 prend place dans le logement 113 contre un épaulement 117 dans l'étrier 100 comme cela est réalisé par le procédé de montage décrit au document EP 1 936 227 cité ici à titre de référence. La cartouche 200 est ainsi bloquée dans son logement 113 dans un sens par son appui par l'intermédiaire de la collerette fendue 263 contre l'épaulement 117 et dans le sens opposé par le clip 201 accroché dans la gorge périphérique 118, seuls restant libres en mouvement, la tige de commande 210 et le piston 240.

Le piston 240 (figure 7) comporte une ou plusieurs rainures longitudinales 243 pour être ainsi bloqué en rotation dans le logement 113 tout en restant libre en translation. Les branches 233 chevauchent la partie arrière au niveau du bord du plateau 212 et le disque formant la cage 231 tenant les billes est également maintenu par les branches ce qui est important pour la réalisation du sous-ensemble constitué par la cartouche de conversion et cela facilite sa mise en place dans le logement 113.

Après installation de la cartouche 200, l'arbre de commande 210 et son plateau 212 sont en revanche libres en rotation de sorte que le mouvement de rotation de l'arbre de commande 210 se traduit par une rotation relative de son plateau 212 par rapport au plateau 242 intégré au piston 240 et produit le mouvement de translation du piston 240, transmis au piston de frein 5.

Le piston de conversion 240 s'appuie contre l'arrière du piston de frein 5 par un compensateur d'usure non représenté, logé dans le piston 240 formant un écrou d'une liaison vis-écrou. La compensation de l'usure des patins de frein se fait de manière connue de l'homme du métier lors du mouvement de retrait de l'écrou, à la libération du frein de stationnement.

La cartouche 200 est composée d'un nombre réduit de pièces et constitue une unité assemblée, prête à être installée dans le fût de l'étrier de frein 100. Cette mise en place ne gêne ni ne complique l'installation ultérieure du piston de frein et ne perturbe pas ensuite la purge du circuit de frein.

La présente invention concerne le domaine des systèmes de freins à disque de véhicules automobiles.

### NOMENCLATURE DES ELEMENTS PRINCIPAUX

- 1: frein à disque
- 2: disque de frein
- 3: patin fixe
- 4: patin mobile
- 5: piston de frein
- 17: gorge périphérique du logement
- 100: étrier
- 110: cylindre
- 111: chambre de piston
- 112: branchement
- 113: logement
- 114: fond du logement
- 115: orifice du fond du logement
- 117: épaulement
- 118: gorge périphérique
- 119: rainure
- 120: levier
- 200: cartouche de conversion de mouvement
- 201: clip
- 210: arbre de commande
- 211: manchon cylindrique
- 212: premier plateau
- 213: prise
- 214: anneau à joint torique
- 220: cage
- 230: verrou de blocage en rotation
- 231: couronne
- 232: manchon
- 233: branche de verrouillage
- 233a: côté de la branche 233
- 233b: côté de la branche 233
- 233c: côté de la branche 233
- 233d: côté de la branche 233
- 240: piston de conversion
- 241: manchon
- 242: deuxième plateau
- 243: rainure axiale de verrouillage
- 243b: côté de la rainure 243
- 243c: côté de la rainure 243
- 243d: côté de la rainure 243
- 245: écrou
- 250: ressort de rappel
- 260: cage
- 261: fond
- 262: lame
- 263: collerette fendue
- 264: lame intermédiaire
- 300: cylindre
- 301: chambre
- 302: prolongement du cylindre
- 304: orifice du fond
- 303: fond
- 305: trou borgne
- 310: cartouche
- 311: palier
- 312: manchon
- 313: pion
- 314: axe de transmission
- 315: plateau
- 316: rondelle
- 317: billes
- 318: cage
- 319: plateau
- 320: partie en saillie
- 321: découpe
- 322: piston de conversion
- 323: cage
- 324: ressort de compression

## Revendications

1. Frein à disque comprenant un étrier flottant (100) chevauchant le disque de frein (2) portant un patin fixe (3) et formant un cylindre (110) logeant un piston (5) portant un patin mobile (4) pour serrer le disque de frein,
• le piston (5) étant commandé par le circuit hydraulique et par le système de freins de stationnement par l'intermédiaire d'une cartouche de conversion de mouvement (200) transformant le mouvement de pivotement du levier pivotant relié au frein de stationnement, porté par l'étrier (100), en un mouvement de translation pour pousser le piston de frein (5),
• le cylindre (110) ayant une partie avant logeant le piston de frein (5) et une partie arrière formant un logement (113) recevant la cartouche de conversion (200) à forme de révolution venant contre le patin mobile (4) et le fond du cylindre,
la cartouche (200) traversant de manière étanche un orifice axial (115) du fond (114) du cylindre (110) pour relier son arbre de commande au levier pivotant (120) du frein de stationnement,
**caractérisé en ce que**
A) la cartouche de conversion (200) comprend:
- une partie arrière appuyée contre le fond (114) du logement (113) du cylindre et se composant :
* d'un verrou de blocage en rotation (230) en forme de couronne (231) appuyée autour de l'orifice axial (115) du fond du logement (113), et portant au moins une branche (233) de forme cylindrique, dirigée vers l'avant parallèle à l'axe et d'un arbre de commande (210) relié au levier pivotant composé d'un manchon (211) traversant la couronne (231), et d'un plateau (212) venant devant la couronne (231) dans le périmètre défini par la branche (233) du verrou,
la face avant du plateau (212) comportant des rampes,
- une partie avant appuyée contre le piston de frein (5), mobile en translation par rapport au cylindre (110) mais bloquée en rotation, et se composant :
* d'un piston de conversion (240) muni d'un (deuxième) plateau (242) destiné à coopérer avec le (premier) plateau (212) de l'arbre de commande (210) avec interposition de billes mobiles dans des rampes des deux plateaux (212, 242) pour transformer le mouvement de rotation relatif des deux plateaux (212, 242) en un mouvement de translation du piston de conversion (240) pour agir sur le piston de frein (5) et le bord du deuxième plateau (242) comporte au moins une rainure axiale de verrouillage en rotation (243) pour recevoir la branche (233) correspondante du verrou (230),
* d'une cage de retenue (290) du piston de conversion (240) dans le cylindre (110) par l'intermédiaire d'un clip (211) ainsi qu'un ressort de rappel (250) interposé entre la cage et le piston de conversion (240), agissant contre le mouvement de translation généré par les plateaux (212, 242) et les billes,
B) le cylindre (110) comporte au niveau de sa partie arrière formant le logement (113) recevant la cartouche de conversion (200), au moins une rainure longitudinale (119) recevant la branche de verrouillage (233) du verrou (230), branche par ailleurs engagée dans une rainure axiale (243) du deuxième plateau (242).

2. Frein à disque selon la revendication 1,
**caractérisé en ce que**
- le logement (113) de la cartouche (200) dans l'étrier (100) et le plateau (242) du piston de conversion (240) comportent chacun trois rainures longitudinales (119, 243) et
- le verrou (230) est muni de trois branches longitudinales (233),
- les rainures (119, 243) étant réparties de manière équiangulaire et se faisant face et les branches (233) étant dans des positions homologues à celles des rainures (119, 243) se logent chacune à la fois dans une rainure (119) du logement (113) et une rainure (243) du plateau (241) du piston (240).

3. Frein à disque selon les revendications 1 et 2,
**caractérisé en ce qu'**
le verrou (230) se compose d'une couronne (231) portant trois branches longitudinales (233), parallèles à l'axe, et un manchon (231) dépassant de la couronne (231) du côté opposé à celui portant les branches (233), le manchon (232) étant destiné à traverser partiellement le fond du logement (113) du cylindre (110), la couronne (231) appuyée autour de l'orifice axial (115) du fond du logement (113) constituant un palier pour le plateau (212) de l'arbre de commande (210).

4. Frein à disque selon la revendication 1,
**caractérisé en ce que**
la rainure (119) du logement (113) a une section en arc de cercle et la branche (233) du verrou a une section rectangulaire avec un côté en forme d'arc de cercle de rayon sensiblement égal à celui de la rainure dans laquelle la branche (233) pénètre au moins sur une partie de sa section (119).

5. Frein à disque selon la revendication 1,
**caractérisé en ce que**
le plateau (241) du piston (240) a au moins une rainure (243) de section rectangulaire.

6. Frein à disque selon la revendication 1,
**caractérisé en ce que**
le logement (113) de la cartouche (200) comporte un épaulement (117) pour recevoir en appui la collerette (263) de la cage (260) et une gorge périphérique (118) pour recevoir le clip (201).

7. Frein à disque selon la revendication 1,
**caractérisé en ce que**
la cage (260) est une pièce en acier élastique de forme globale tronconique ayant un fond (261) en forme de couronne portant des lames (262) reliées à une collerette fendue (263) et des lames intermédiaires (264), d'extrémité libre, recevant le clip (201).

## Patentansprüche

1. Scheibenbremse, einen Schwimmsattel (100) umfassend, der die Bremsscheibe (2) überfasst, einen festen Bremsbelagträger (3) tragend und einen Zylinder (110) ausbildend, in dem ein Kolben (5) untergebracht ist, einen beweglichen Bremsbelagträger (4) tragend, um die Bremsscheibe festzuklemmen,
• wobei der Kolben (5) durch den Hydraulikkreislauf und durch das Parkbremssystem mittels einer Bewegungsumkehrkartusche (200) gesteuert wird, welche die Schwenkbewegung des Schwenkhebels, der mit der Parkbremse verbunden ist, die von dem Sattel (100) getragen wird, in eine Translationsbewegung umwandelt, um den Bremskolben (5) zu drücken,
• wobei der Zylinder (110) einen vorderen Teil, in dem der Bremskolben (5) untergebracht ist, und einen hinteren Teil aufweist, der eine Aufnahme (113) ausbildet, welche die Umwandlungskartusche (200) in Umdrehungsform aufnimmt, die gegen den beweglichen Bremsbelagträger (4) und den Boden des Zylinders anliegt,
wobei die Kartusche (200) eine axiale Öffnung (115) des Bodens (114) des Zylinders (110) auf abdichtende Weise zur Verbindung ihrer Steuerwelle mit dem Schwenkhebel (120) der Parkbremse durchquert,
**dadurch gekennzeichnet, dass**
A) die Umwandlungskartusche (200) umfasst:
- einen hinteren Teil, der sich gegen den Boden (114) der Aufnahme (113) des Zylinders abstützt und sich zusammensetzt aus:
* einer drehbaren Blockierungsverriegelung (230) in Form einer Krone (231), die sich um die axiale Öffnung (115) des Bodens der Aufnahme (113) abstützt, und mindestens einen Schenkel (233) zylindrischer Form trägt, der nach vorne parallel zu der Achse gerichtet ist, und
aus einer Steuerwelle (210), die mit dem Schwenkhebel verbunden ist, der sich aus einer Buchse (211), die durch die Krone (231) hindurch geht, und einer Scheibe (212) zusammensetzt, die vor der Krone (231) in einem Umfeld liegt, das durch den Schenkel (233) der Verriegelung definiert wird,
wobei die Vorderseite der Scheibe (212) Schrägen umfasst,
- einen vorderen Teil, der sich gegen den Bremskolben (5) translationsbeweglich im Verhältnis zu dem Zylinder (110) abstützt, aber bei der Drehung blockiert ist, und sich zusammensetzt aus:
* einem Umwandlungskolben (240), der mit einer (zweiten) Scheibe (242) versehen ist, die dazu vorgesehen ist, mit der (ersten) Scheibe (212) der Steuerwelle (210) mit zwischen den Schrägen der beiden Scheiben (212, 242) liegenden beweglichen Kugeln zusammenzuwirken, um die Drehbewegung im Verhältnis zu den beiden Scheiben (212, 242) in eine Translationsbewegung des Umwandlungskolbens (240) umzuwandeln, um auf den Bremskolben (5) einzuwirken, und der Rand der zweiten Scheibe (242) mindestens eine drehbare axiale Verriegelungsnut (243) umfasst, um den Schenkel (233) aufzunehmen, welcher der Verriegelung (230) entspricht,
* einem Rückhaltekäfig (290) des Umwandlungskolbens (240) in dem Zylinder (110) mittels eines Clips (211), sowie auch einer Rückstellfeder (250), die zwischen dem Käfig und dem Umwandlungskolben (240) liegt, auf die Translationsbewegung, die durch die Scheiben (212, 242) und die Kugeln erzeugt wird, einwirkend,
B) der Zylinder (110) in Höhe seines hinteren Teils, der die Aufnahme (113) ausbildet, welche die Umwandlungskartusche (200) aufnimmt, mindestens eine längliche Nut (119) umfasst, welche den Verriegelungsschenkel (233) der Verriegelung (230) aufnimmt, wobei der Schenkel darüber hinaus in eine axiale Nut (243) der zweiten Scheibe (242) eingreift.

2. Scheibenbremse nach Anspruch 1,
**dadurch gekennzeichnet, dass**
- die Aufnahme (113) der Kartusche (200) in dem Sattel (100) und die Scheibe (242) des Umwandlungskolbens (240) jeweils drei längliche Nuten (119, 243) umfassen, und
- die Verriegelung (230) mit drei länglichen Schenkeln (233) versehen ist,
- die Nuten (119, 243), die mit gleichen Winkelabständen verteilt sind und sich gegenüberliegen, und die Schenkel (233), die in ähnlichen Stellungen zu denjenigen der Nuten (119, 243) liegen, jeweils gleichzeitig in einer Nut (119) der Aufnahme (113) und einer Nut (243) der Scheibe (241) des Kolbens (240) festgesetzt sind.

3. Scheibenbremse nach den Ansprüchen 1 und 2,
**dadurch gekennzeichnet, dass**
die Verriegelung (230) sich aus einer Krone (231), die drei längliche Schenkel (233) parallel zu der Achse trägt, zusammensetzt, und eine Buchse (231), die über die Krone (231) auf der Seite hinausragt, die derjenigen, welche die Schenkel (233) trägt, gegenüberliegt, wobei die Buchse (232) dazu vorgesehen ist, teilweise durch den Boden der Aufnahme (113) des Zylinders (110) hindurch zu gehen, die Krone (231), die sich gegen die axiale Öffnung (115) des Bodens der Aufnahme (113) abstützt, ein Lager für die Scheibe (212) der Steuerwelle (210) darstellt.

4. Scheibenbremse nach Anspruch 1,
**dadurch gekennzeichnet, dass**
die Nut (119) der Aufnahme (113) einen kreisbogenförmigen Querschnitt aufweist und der Schenkel (233) der Verriegelung einen rechtwinkeligen Querschnitt mit einer kreisbogenförmigen Seite mit einem Radius aufweist, der im Wesentlichen gleich dem der Nut ist, in welche der Schenkel (233) mindestens auf einem Teil seines Querschnitts (119) eindringt.

5. Scheibenbremse nach Anspruch 1,
**dadurch gekennzeichnet, dass**
die Scheibe (241) des Kolbens (240) mindestens eine Nut (243) mit rechtwinkeligem Querschnitt aufweist.

6. Scheibenbremse nach Anspruch 1, **dadurch gekennzeichnet, dass**
die Aufnahme (113) der Kartusche (200) eine Schulter (117), um den Flansch (263) des Käfigs (260) anschlagend aufzunehmen, und eine Umfangsrille (118) umfasst, um den Clips (201) aufzunehmen.

7. Scheibenbremse nach Anspruch 1,
**dadurch gekennzeichnet, dass**
der Käfig (260) aus einem elastischen Stahlteil mit allgemeiner Kegelstumpfform besteht, das einen Boden (261) in Form einer Krone aufweist, welche Streifen (262) trägt, die mit einem geschlitzten Flansch (263) verbunden sind, und die Zwischenstreifen (264) mit freiem Ende den Clips (201) aufnehmen.

## Claims

1. Disc brake comprising a floating stirrup (100) straddling the brake disc (2) bearing a fixed shoe (3) and forming a cylinder (110) housing a piston (5) bearing a mobile shoe (4) for clamping the brake disc,
• the piston (5) being controlled by the hydraulic circuit and by the parking brake system via a motion conversion cartridge (200) transforming the pivoting motion of the pivoting lever linked to the parking brake, borne by the stirrup (100), into a translational motion for pushing the brake piston (5),
• the cylinder (110) having a front part housing the brake piston (5) and a rear part forming a housing (113) receiving the conversion cartridge (200), with shape of revolution, coming against the mobile shoe (4) and the bottom of the cylinder,
the cartridge (200) passing, in a seal-tight manner, through an axial orifice (115) in the bottom (114) of the cylinder (110) to link its control shaft to the pivoting lever (120) of the parking brake, **characterized in that**
A) the conversion cartridge (200) comprises:
- a rear part pressed against the bottom (114) of the housing (113) of the cylinder and consisting of:
* a rotation-blocking lock (230) in the form of a ring (231) pressed around the axial orifice (115) of the bottom of the housing (113), and bearing at least one cylindrical branch (233), directed forwards parallel to the axis, and a control shaft (210) linked to the pivoting lever consisting of a sleeve (211) passing through the ring (231), and a plate (212) coming in front of the ring (231) in the perimeter defined by the branch (233) of the lock,
the front face of the plate (212) comprising ramps,
- a front part pressed against the brake piston (5), mobile in translation relative to the cylinder (110) but blocked in rotation, and consisting of:
* a conversion piston (240) provided with a (second) plate (242) intended to cooperate with the (first) plate (212) of the control shaft (210) with the interposition of mobile balls in ramps of the two plates (212, 242) to transform the relative rotational motion of the two plates (212, 242) into a translational motion of the conversion piston (240) to act on the brake piston (5), and
the edge of the second plate (242) comprises at least one rotation-locking axial groove (243) for receiving the corresponding branch (233) of the lock (230),
* a cage (290) for retaining the conversion piston (240) in the cylinder (110) via a clip (211) and a return spring (250) interposed between the cage and the conversion piston (240), acting against the translational motion generated by the plates (212, 242) and the balls,
B) the cylinder (110) comprises, in its rear part forming the housing (113) receiving the conversion cartridge (200), at least one longitudinal groove (119) receiving the locking branch (233) of the lock (230), the branch being elsewhere engaged in an axial groove (243) of the second plate (242).

2. Disc brake according to Claim 1,
**characterized in that**
- the housing (113) of the cartridge (200) in the stirrup (100) and the plate (242) of the conversion piston (240) each comprise three longitudinal grooves (119, 243) and
- the lock (230) is provided with three longitudinal branches (233),
- the grooves (119, 243) being distributed equiangularly and facing one another and the branches (233) being in positions matching those of the grooves (119, 243) are each housed both in a groove (119) of the housing (113) and a groove (243) of the plate (241) of the piston (240).

3. Disc brake according to Claims 1 and 2,
**characterized in that**
the lock (230) consists of a ring (231) bearing three longitudinal branches (233), parallel to the axis, and a sleeve (231) extending beyond the ring (231) on the side opposite that bearing the branches (233), the sleeve (232) being intended to pass partially through the bottom of the housing (113) of the cylinder (110), the ring (231) pressed around the axial orifice (115) of the bottom of the housing (113) constituting a bearing for the plate (212) of the control shaft (210).

4. Disc brake according to Claim 1,
**characterized in that**
the groove (119) of the housing (113) has an arc-of-circle section and the branch (233) of the lock has a rectangular section with one side in the form of an arc-of-circle with a radius substantially equal to that of the groove into which the branch (233) penetrates at least over a part of its section (119).

5. Disc brake according to Claim 1,
**characterized in that**
the plate (241) of the piston (240) has at least one groove (243) of rectangular section.

6. Disc brake according to Claim 1,
**characterized in that**
the housing (113) of the cartridge (200) comprises a shoulder (117) to receive, bearing against it, the flange (263) of the cage (260) and a peripheral groove (118) to receive the clip (201).

7. Disc brake according to Claim 1,
**characterized in that**
the cage (260) is a part made of elastic steel of overall tapered form having a bottom (261) in the form of a ring bearing blades (262) linked to a slotted flange (263) and intermediate blades (264), with free ends, receiving the clip (201).
